# EUROPEAN PATENT APPLICATION

(11) **EP 2 355 030 A1**
(43) Date of publication of application: **10.08.2011**
(21) Application number: 10001053.7
(22) Date of filing: 02.02.2010
(51) Int. Cl.: G06Q 20/00

(54) **Electronic clearing and payment system**

(71) Applicant: TRAXPAY AG, 50670 Köln (DE)
(72) Inventor: The designation of the inventor has not yet been filed
(74) Representative: Bach, Alexander

(57) **Abstract**

The invention relates to a computer-implemented method for online payment, comprising the steps:
- receiving a business object comprising an instruction by a user to transfer a payment amount from a first account to a second account;
- debiting the payment amount to the first account;
- crediting the payment amount to the second account;
- after the payment amount has been credited to the second account and debited to the first account, generating a message indicating that the transaction has been completed;

characterized in that the business object further comprises remittance data having arbitrary size.

## Description

The present invention is related to a computerized clearing and payment system.

Existing electronic clearing, payment and settlement systems are characterized by the undue time span between the initiation of an electronic transfer and the final settlement into the beneficiary's account, eventual data loss of remittance data, partially due to inherent media breaks.

What is desired, therefore, is an electronic clearing and payment system providing instant, finalized and guaranteed payment, a tracking system enabling customers to follow payment routes and status as well as full reconciliation of all payments, which is often lacking due to a loss of remittance data.

Moreover, planning liquidity on time and budget requires complicated extraction of account information from separate third party systems, which is also subject to data loss.

Further lacking are technical means for initiating, executing and documenting/tracking payment disputes. Therefore, it is also desirable to operate a payment system wherein such dispute document and tracking mechanisms are automatically provided.

It is therefore an object of the present invention to provide an electronic clearing and payment system that is better suited to fulfill the above-described customer's needs. It is a particular object to provide an electronic clearing and payment system that is highly responsive to user inputs and modular at the same time.

These objects are achieved by an electronic clearing and payment system according to independent claim 1 of the present invention. Advantageous embodiments are defined in the dependent claims.

In the context of the invention, real time execution is defined as synchronized communication between different modules. The synchronized communication may be quasi-synchronous, i.e. asynchronous but obeying predefined constraints for response time. For example, the response time of a quasi-synchronous call may be restricted to 10 milliseconds, 20 milliseconds, 30 milliseconds etc.

The modularity of the system provides the advantage of being able to use standard off-the-shelf components for its constituent parts. Tight integration of these modules by quasi-synchronous communication, on the other hand, assures the system's responsiveness.

Further aspects and advantages of the inventive system will be discussed in the following description of a preferred embodiment of the invention, with reference to the annexed drawing, in which
- Fig. 1: shows a schematic overview of an electronic payment and settlement system according to a first embodiment of the invention.
- Fig. 2: shows a detailed overview of the payment system comprised in figure 1.
- Fig. 3: is a schematic diagram of the interaction between the payment, the settlement and the clearing module.
- Fig. 4: shows a computer implemented method for online payment.

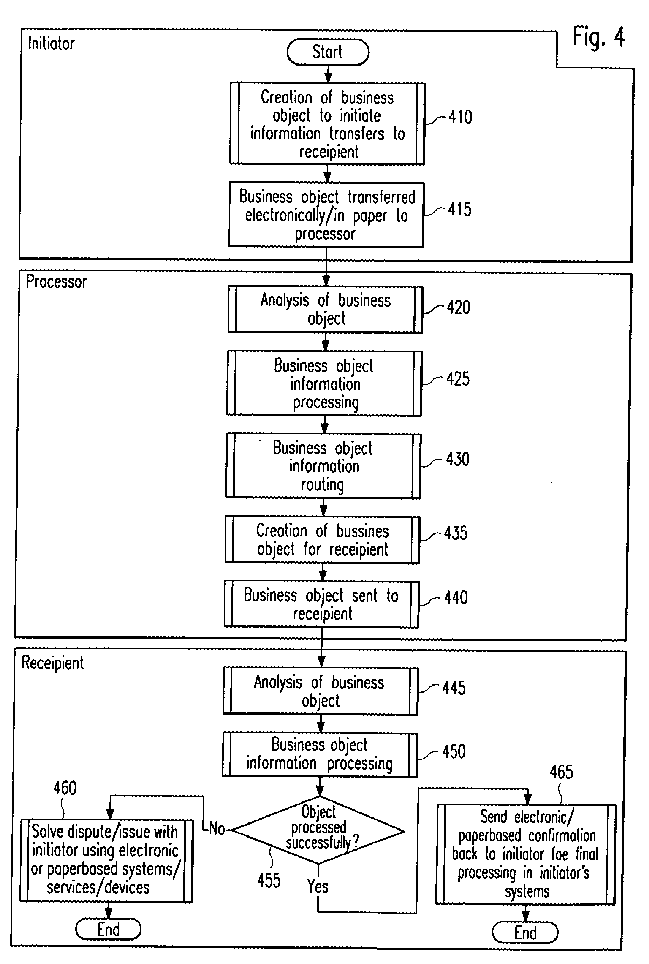

- Fig. 4: shows an electronic payment and settlement system according to a second and preferred embodiment of the invention.

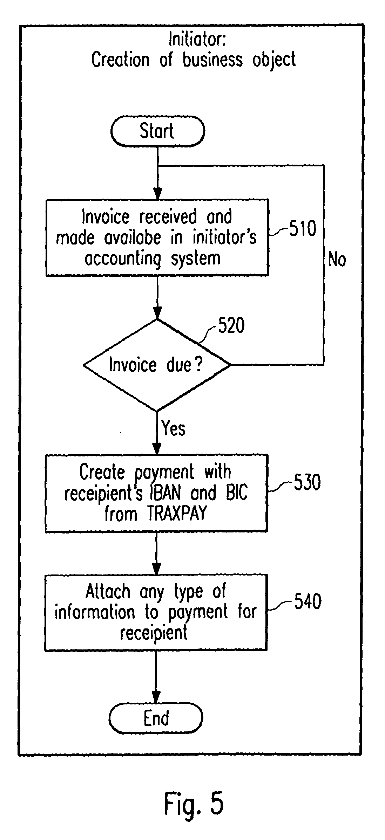

- Fig. 5: is a flow chart of the steps taken by the initiator when initiating a method for online payment according to figure 4, in an exemplary embodiment.

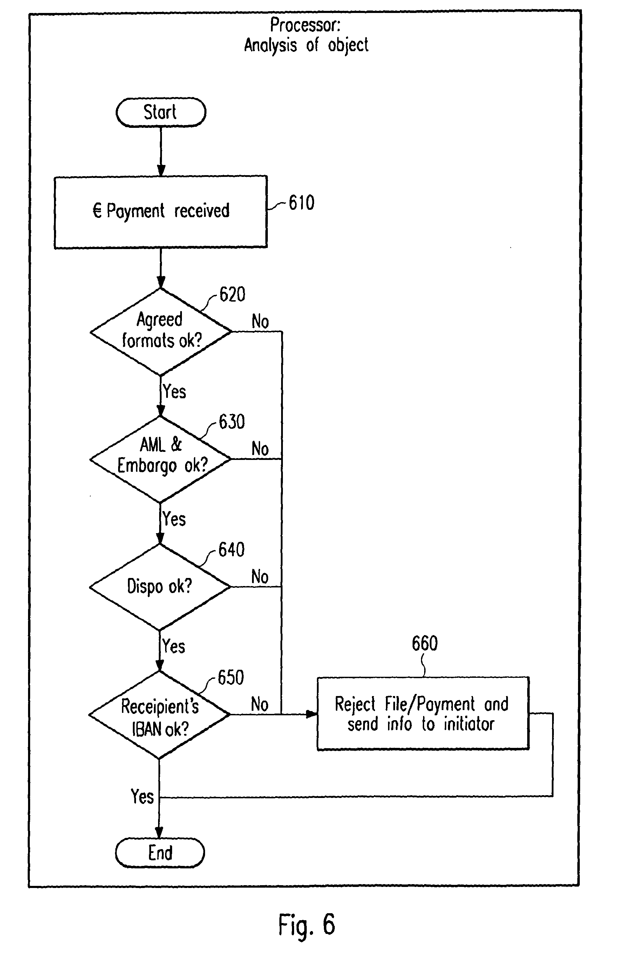

- Fig. 6: shows a flow chart of an example of how the business object sent by the initiator is analyzed by the processor, the business object is received in step 610.

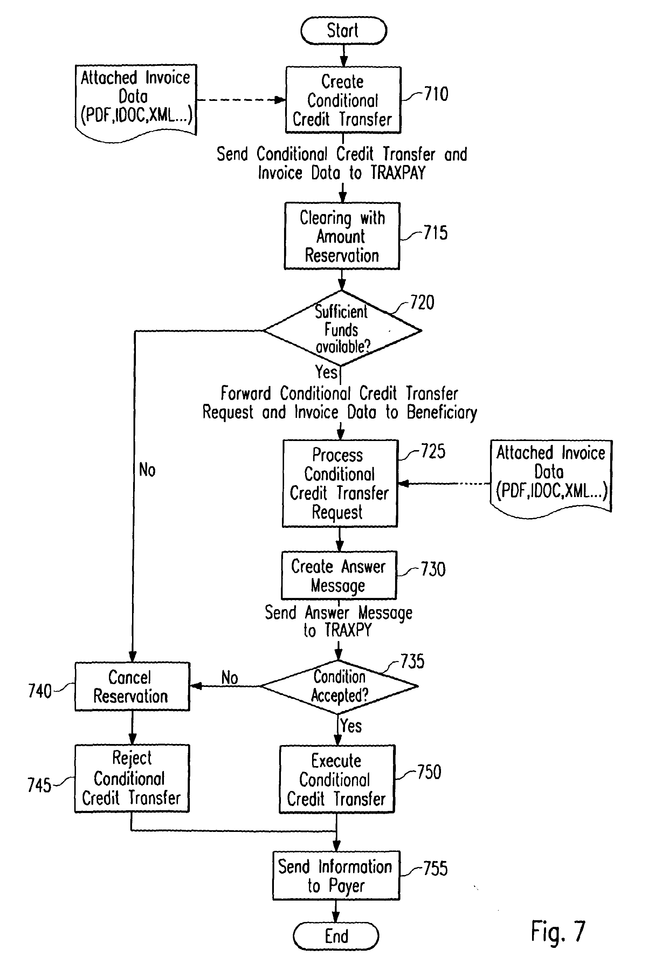

- Fig. 7: shows a further example of an online transaction carried out within the frame work described in connection with figure 4 and involving a conditional credit transfer.

### Detailed description of the invention

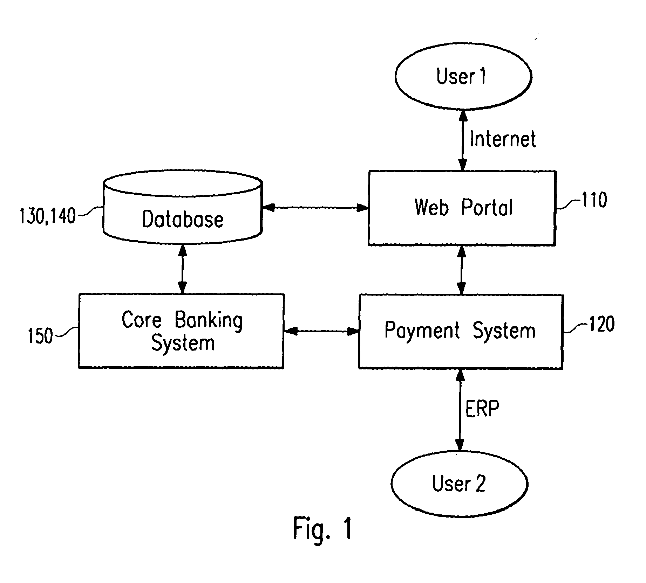

Figure 1 shows a schematic overview of an electronic payment and settlement system according to an embodiment of the invention. The system comprises a web portal 110, a payment system 120, each being probably connected to databases 130, 140. Users 1 and 2 may interact with the payment system either via the web portal 110, using the internet or via their enterprise resource planning systems, directly connected to the payment system 120. Users 1 and 2 may access the payment system either directly via their enter enterprise resource planning systems or indirectly, using a web portal 110. The payment system 120 is operatively connected to a core banking system 150, the core banking system 150 may access the payment system's database 140 for keeping accounts of the individual users, generating reports or managing transactions.

The payment system provides high level services to the users, while the core banking system provides the basic steps for implementing these services, e.g. debiting a user's account or crediting a payment amount to another user's account by performing suitable transactions on an electronic database, where the accounts are represented.

More particularly, the core banking system 150 may combine reliable and highly automated processing of all payment operations with authorization and security rules. Users can manage remittances, national transfers, standing orders, bill collections, check processing, debit and credit card administration, and cash operations.

Optionally, support for payments made under the new Single Euro Payment Area (SEPA) rules may be included. However, it is explicitly noted that the payment system may operate without such support and one particular advantage of the envisioned clearing and payment system is that it provides a practical alternative to an implementation of these rules.

The core banking system's capabilities for deposit management may also handle all types of transactions for retail, private, and corporate banking. This includes transactions related to current accounts, savings accounts, certificates of deposit, term deposits, and money market deposits. A central calculation engine may b used for handling all types of interest and costs - including credit interest, debit interest, fees and service costs quasi-synchronously or in real-time.

In one embodiment of the invention, standard, off-the-shelf components may be used as core banking system 150, such as the 'Thaler' system provided by Callatay & Wouters.

In another embodiment, the core banking system may be implemented with a guarantee to full traceability of every currency unit, i.e. wherein each currency unit (a cent or an arbitrary amount used for representing payment amounts within the system) is explicitly assigned to a current account or owner and a full history of all previous owners is available. This supports measures against money laundering.

More particularly, this may be achieved by representing each currency unit with a unique key. The unique keys may be positive integers. Then, an account having a given balance may be represented as a set of unique keys representing currency units that, when summed up, are equal to the account balance.

Consequently, in the case that both accounts are managed by the inventive system, a payment transaction between two accounts may be implemented by selecting a subset of keys from a first set representing the first account, subtracting it from the first set and adding the subset of keys to a second set representing the second account.

The selection may be done randomly. Alternatively, it may be based on an explicit selection of the user or predetermined criteria, such as an ordering or ranking of the keys, a previous owner(s) of the respective key(s), or the full transaction history.

If the second account is an external account, the virtual currency must be converted into real currency. Accordingly, money has to be transferred to the external account, using the existing banking system. Finally, the keys must be "forgotten" by the system of the invention and never be used again.

Finally, the transaction history associated with a currency unit may be shown to each participant user via the web interface.

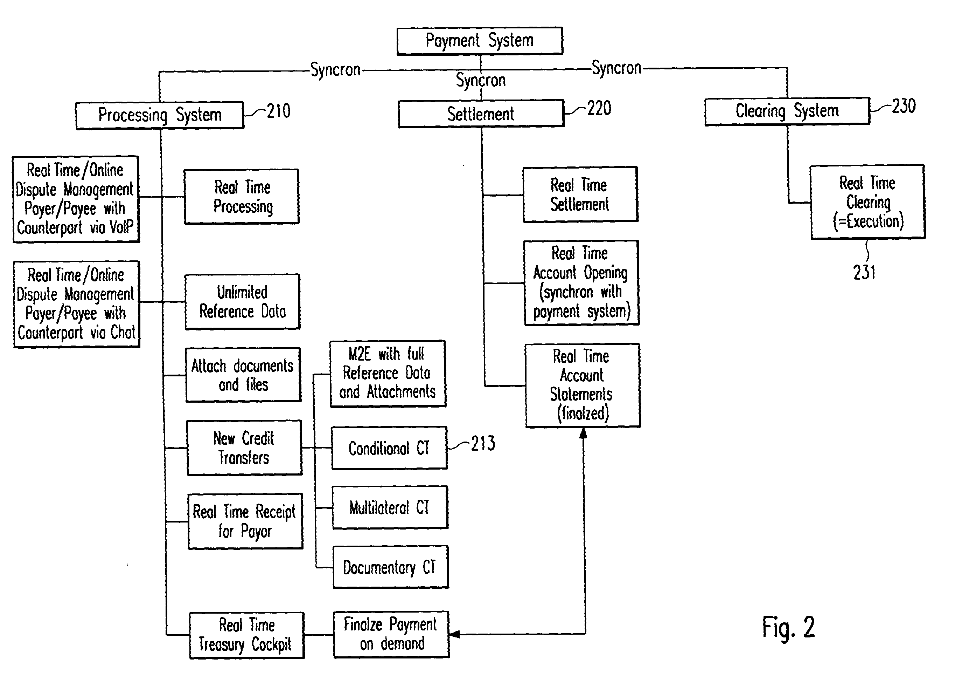

Figure 2 shows a diagram of the individual components of the payment system 120 shown in figure 1.

The payment system comprises a processing system 210, a settlement system 220 and a clearing system 230.

The processing system 210 comprises functionality for setting up complex transactions, which are executed by the clearing system 220. More particularly, it comprises a subsystem for implementing the real-time processing of payment transactions.

Preferably, the processing subsystem of the payment system may comprise a submodule for providing remittance data having unlimited size. This functionality may be implemented by dynamically allocating storage space for the storage/documentation of remittance data based on the actual input of given user/transaction, instead of using a fixed storage space, as in existing systems. This data may then be retrieved from the dynamically allocated storage space by the clearing system 230, which executes the transaction in real time, using the real time execution module 231.

Allowing remittance data having unlimited size has the advantage that payments may be reconciled more easily by the receiver.

Further, it may comprise a real-time online dispute management submodule for managing disputes between a payor and a payee, e.g. using voice-over-IP technology or a chat module.

The processing subsystem 210 may further comprise a submodule for attaching arbitrary data objects to a transaction, such as documents, images or other data files. For example, a user may attach a scanned invoicing document to a transaction or a receipt, when he wants to dispute a payment amount, or a contract document etc. The clearing system 220 may forward or route the attached data objects or files to the recipient of the transaction and provide for needed storage space on this side, e.g. by putting it into his mailbox or accounting transactions list.

The payment's module 210 may further comprise a sub-module 213 for conditional credit transfer. More particularly, the electronic payment and settlement system provides means by which users may define conditions for the execution of their transactions, which are automatically processed by the system. Fulfillment of the conditions may either be checked by the user upon receipt of automatically generated notifications or checked automatically by the system itself, on the receipt of defined messages or documents etc. If the condition is finally verified and met either by the user or the system, the payment module 210 hands the transaction over to the clearing system 220, which finally executes the transaction.

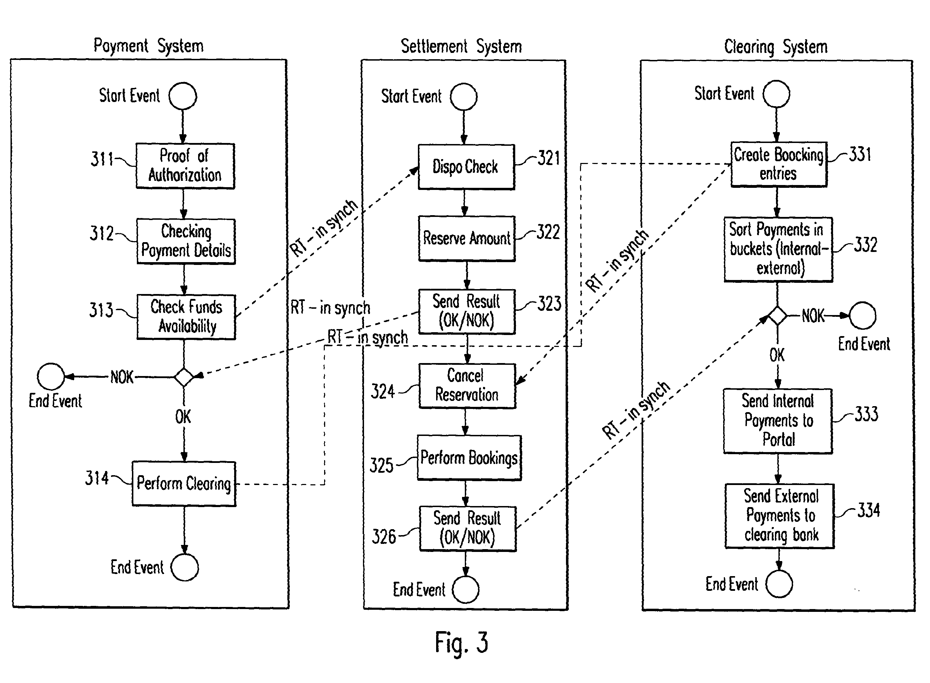

Figure 3 is a schematic diagram of the interactions between the payment system, the settlement system and the clearing system shown in figs. 1 and 2. The transaction is initiated at the payment system interface. In step 311, a proof of authorization is checked. If this check has been successful, the payment details are checked in step 312. Then in step 313, the availability of sufficient funds is checked by causing the settlement system to perform a dispo check in step 321. In step 322, the amount to be transacted is reserved, if this check in step 321 has been successful. When the amount has been reserved in step 322, the settlement system sends a confirming message back to the payment system, in step 323. The communication between the payment and the settlement systems for performing these steps is done in real time or quasi-synchronicity. If the result of the message sent by the settlement system is 'ok', then the transaction is cleared in step 314. Otherwise, the transaction event is ended.

Clearing is performed by the clearing system. Step 331, booking entries are created for the requested transaction. Then, in step 332, payments are classified as to whether they are internal or external. Then, in step 332, payments are classified as to whether they are internal or external. Then, the clearing system hands over to the settlement system in order to cancel the reservation in step 324. Subsequently, the settlement system performs the bookings in step 325 and sends a result message back to the clearing system in step 326.

If the result is ok, then the clearing system sends the internal payments to the portal in step 333. Finally, the external payments are sent to a clearing bank in step 334. Again, communication between the settlement and the clearing system is done in real time or quasi-synchronicity.

Figure 4 shows a computer implemented method for online payment.

In step 410, a business object is created to initiate a transaction by transferring information to a recipient. Hereby, a business object is a digital record comprising information pertinent to the respective business transaction or representing the transaction, here: payment that is stored in computer memory or non-volatile media. In particular, the business object may represent a payment transaction between a payor and payee, wherein the payor may be the initiator of the business transaction and the payee may be a recipient, to which the business object is rooted. Additionally, the business object representing the transaction may further comprise attached documents and the history of the transaction, i.e. a history of individual steps that have already been carried out in completing the transaction.

In step 415, such created business object is then transferred electronically to a processing module. In the processing module, the business object is first analyzed in step 420.

The information relating to the business transaction represented by the business object is then processed in step 425.

In step 430, the information comprised within the business object is rooted in step 430.

In step 435, a business object is created for the recipient, based on the rooted information from the initiator's business object.

In step 440, the newly created business object for the recipient is sent to the recipient.

At the recipient's side, the business object is analyzed in step 445.

In step 450, the business object information is processed and depending on whether the object has been processed successfully, which is checked in step 455, the method branches to step 460, wherein a dispute or issue with the initiator is solved using electronic or paper based systems, services and devices if no and wherein an electronic confirmation is sent back to the initiator for initial processing in the initiator's systems, if the business object has been processed successfully, in step 465.

More particularly, the electronic confirmation may be a receipt indicating that the transaction has been completed with the legal consequence that the transferred amount of money is now owned by the receiver.

Figure 5 is a flow chart of the steps taken by the initiator when initiating a method for online payment according to figure 4, in an exemplary embodiment. In step 510, an invoice is received and made available in the initiator's accounting system.

In step 520, it is checked whether the received invoice is due. If yes, the method branches to step 530, wherein a business object representing a payment is initiated, based on the IBAN and the BIC of the recipient.

In step 540, the initiator may optionally attach any type of information to the business object for representing the payment for the recipient, e.g. contract documents or a copy of the invoice or other identifying data allowing the receiver to consolidate his accounts. Particularly, the attached information may have any size and is not limited to e.g. 180 characters, as in current online banking systems.

Figure 6 shows a flow chart of an example of how the business object sent by the initiator is analyzed by the processor, the business object is received in step 610.

In step 620, it is checked whether the agreed formats are fulfilled by the information attached to the business object.

If yes, it is checked in step 630, whether anti money laundering (AML) and/or embargo checks are satisfied, if this is the case, it is checked whether the initiator is authorized to transfer the amount in step 640. If this is the case, it is checked in step 650 if the recipient's IBAN is valid and if this is also the case, the method continues by processing the business object information, as shown in step 425 in figure 4.

Otherwise, the business object or rather the payment that it represents is rejected and corresponding information is sent to the initiator in step 660.

Figure 7 shows a further example of an online transaction carried out within the frame work described in connection with figure 4 and involving a conditional credit transfer.

In step 710, the initiator creates a business object representing a conditional credit transfer. Attached to the business object is invoice data in portable document format, iDOC or xml format. Further attached is a condition for the conditional credit transfer. The condition is represented as a standardized document encoding standardized requirements that the payee may accept or reject and wherein the transaction is only effected, when the payee has confirmed his acceptance. Examples of such conditions may be a certain due date, rebates to an actual payment amount etc.

In step 715, the transaction is cleared insofar as the respective amount is reserved for the transaction until the payee has decided on whether he accepts the condition or not.

In step 720, it is checked whether sufficient funds are available for the transaction. If not, the reservation is cancelled in step 740. If yes, the beneficiary processes the conditional credit transfer request having attached the condition itself and all related documents.

Then, an answer message is created in step 730. In step 735 it is checked, whether the created answer message implies that the condition set by the initiator has been accepted. If not, the reservation is again cancelled in step 740, if yes, the condition credit transfer is executed in step 750. After cancelling the reservation in step 740, the conditional credit transfer is rejected in step 745. In either case, the result is sent to the payor in step 755.

As noted above, example embodiments may include computer program products. The computer program products may be stored on computer-readable media for carrying or having computer-executable instructions or data structures. Such computer-readable media may be any available media that can be accessed by a general purpose or special purpose computer. By way of example, such computer-readable media may include RAM, ROM, EPROM, EEPROM, CD-ROM or other optical disk storage, magnetic disk storage or other magnetic storage devices, or any other medium that may be used to carry or store desired program code in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is an example of a computer-readable medium. Combinations of the above are also to be included within the scope of computer readable media. Computer-executable instructions include, for example, instructions and data which cause a general purpose computer, a special purpose computer, or a special purpose processing device to perform a certain function or group of functions. Furthermore, computer-executable instructions include, for example, instructions that have to be processed by a computer to transform the instructions into a format that is executable by a computer. The computer-executable instructions may be in a source format that is compiled or interpreted to obtain the instructions in the executable format. When the computer-executable instructions are transformed, a first computer may for example transform the computer executable instructions into the executable format and a second computer may execute the transformed instructions.

The computer-executable instructions may be organized in a modular way so that a part of the instructions may belong to one module and a further part of the instructions may belong to a further module. However, the differences between different modules may not be obvious and instructions of different modules may be intertwined.

Example embodiments have been described in the general context of method operations, which may be implemented in one embodiment by a computer program product including computer-executable instructions, such as program code, executed by computers in networked environments. Generally, program modules include for example routines, programs, objects, components, or data structures that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such operations.

Some embodiments may be operated in a networked environment using logical connections to one or more remote computers having processors. Logical connections may include for example a local area network (LAN) and a wide area network (WAN). The examples are presented here by way of example and not limitation.

Such networking environments are commonplace in office-wide or enterprise-wide computer networks, intranets and the Internet. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An example system for implementing the overall system or portions might include a general purpose computing device in the form of a conventional computer, including a processing unit, a system memory, and a system bus that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The drives and their associated computer readable media provide nonvolatile storage of computer executable instructions, data structures, program modules and other data for the computer.

Software and web implementations could be accomplished with standard programming techniques with rule based logic and other logic to accomplish the various database searching steps, correlation steps, comparison steps and decision steps. It should also be noted that the word "component" as used herein and in the claims is intended to encompass implementations using one or more lines of software code, hardware implementations, or equipment for receiving manual inputs.

## Claims

1. Computer-implemented method for online payment, comprising the steps:
- receiving a business object comprising an instruction by a user to transfer a payment amount from a first account to a second account;
- debiting the payment amount to the first account;
- crediting the payment amount to the second account;
- after the payment amount has been credited to the second account and debited to the first account, generating a message indicating that the transaction has been completed;
**characterized in that** the business object further comprises remittance data having arbitrary size.

2. The method according to claim 1, further comprising the step of routing the message to the owner of the first account.

3. Method according to claim 1, further comprising the step of routing the message to the owner of the second account.

4. Method according to claim 1, further comprising the step of routing the message to the user.

5. The method according to claim 1,
wherein the steps of debiting, crediting, and generating are executed quasi-synchronously.

6. Method according to claim 1, wherein the business object further comprises remittance data having arbitrary size.

7. Method according to claim 1, wherein the payment is executed depending on a condition also comprised within the business object.

8. Method according to claim 1, further comprising the step of presenting the account balance to the user.

9. Electronic clearing and payment system, comprising:
- means for receiving a business object comprising an instruction by a user to transfer a payment amount from a first account to a second account;
- means for debiting the payment amount to the first account;
- means for crediting the payment amount to the second account;
- means for generating a message indicating that the transaction has been completed, after the payment amount has been credited to the second account and debited to the first account;
**characterized in that** the business object further comprises remittance data having arbitrary size.

10. Computer program product, comprising instructions that when executed on a computer, implement a method according to one of claims 1 to 8.
